# EUROPÄISCHE PATENTANMELDUNG

(11) **EP 4 272 923 A1**
(43) Veröffentlichungstag der Anmeldung: **08.11.2023**
(21) Anmeldenummer: 23154811.6
(22) Anmeldetag: 03.02.2023
(51) Int. Cl.: B29C 45/17, B29C 45/26, B62K 21/12, B62K 21/18, B29C 45/00, B29L 31/30

(54) **VERFAHREN ZUR HERSTELLUNG EINES KUNSTSTOFFLENKERS FÜR EIN ZWEIRAD**

(30) Priorität: 03.05.2022 DE 102022110819
(71) Anmelder: Plastic Innovation GmbH, 4100 Ottensheim (AT)
(72) Erfinder: CAKMAK, Umut, 2340 Mödling (AT)
(74) Vertreter: Laufhütte, Dieter

(57) **Zusammenfassung**

Die Erfindung betrifft ein Verfahren zur Herstellung eines im Inneren wenigstens einen Hohlraum aufweisenden Bauteils aus thermoplastischen Kunststoff für ein Zweirad mittels Kunststoffspritzgiessens, folgende Schritte umfassend:
- Schließen des konfigurierten Spritzgusswerkzeuges;
- Einspritzen einer plastifizierten Kunststoffschmelze in das geschlossene Spritzgusswerkzeug;
- Injizieren wenigstens eines Fluids in das geschlossene Spritzgusswerkzeug zum Verdrängen der plastischen Seele aus dem Inneren des Bauteils; und
- Öffnen des Spritzgusswerkzeuges und Entformen des Bauteils;
wobei es sich bei dem Bauteil um einen Lenker handelt.

## Beschreibung

Die Erfindung betrifft ein Verfahren zur Herstellung eines im Inneren wenigstens einen Hohlraum aufweisenden Kunststoffbauteils bei dem es sich um einen Lenker für ein Zweirad handelt. Als Zweirad im Sinne der Erfindung kann zum einen ein herkömmliches Fahrrad oder ein Elektrofahrrad gemeint sein. Überdies ist unter einem Zweirad aber auch ein motorisiertes Zweirad wie ein Mofa, Moped, Motorrad sowie Motor- und Elektroroller zu verstehen.

Es ist bereits bekannt, Fahrradlenker aus Kunststoff herzustellen. Hierzu wird üblicherweise ein Harzinjektionsverfahren, welches unter der Bezeichnung "Resin Transfer Moulding" (RTM) bekannt ist, eingesetzt. Bei diesem Verfahren werden Glas- und/oder Kohlefasergewebe in ein formgebendes Werkzeug eingelegt. Bei geschlossenem Werkzeug wird das Gewebe mit einem duroplastischen Matrixmaterial, wie einem Epoxidharz oder Polyurethan, welches in das Werkzeug injiziert wird, getränkt. Die duroplastischen Matrixmaterialien bestehen meist aus zwei Grundsubstanzen, welche vor dem Einbringen in das Werkzeug gut miteinander vermischt werden müssen. Nach der Vermischung und der Injektion in das Werkzeug erfolgt eine chemische Reaktion. Nach entsprechender Umsetzung der Reaktanzen kann das Bauteil entformt werden.

Die Glas- oder Kohlefasergewebe werden üblicherweise in einem dreidimensional verwebten Zustand in dem Werkzeug angeordnet. Ferner wird ein aufblasbarer Schlauch in das Innere des Gewebes eingelegt, so dass nach der Harzinjektion der Schlauch im Bauteilinneren mit einem Fluid aufgeblasen werden kann und ein Hohlraum im Bauteil entsteht. Nach Beendigung der Reaktion der Reaktanzen wird das unter Druck eingebrachte Fluid abgelassen. Das ausgehärtete Bauteil kann anschließend entnommen werden.

Fahrradlenker, die aus duroplastischen Matrixmaterial bestehen, haben neben erhöhten Fertigungskosten den großen Nachteil, dass sie aufgrund des gewählten Materials nicht sinnvoll recycelt werden können. Abgesehen von einer thermischen Verwertung durch Verbrennen gibt es keine vernünftige Wiederverwertung für die aus duroplastischen Matrixmaterial hergestellten Bauteile.

Die vorgenannten Nachteile ließen sich durch einen Kunststoff mit thermoplastischen Materialeigenschaften beheben. Aufgrund der schlechten Materialeigenschaften im Hinblick auf die erforderliche Stabilität eines Fahrradlenkers wurde bei den bekannten Verfahren jedoch davon abgesehen, Fahrradlenker vollständig aus thermoplastischen Kunststoff herzustellen. Schließlich handelt es sich bei dem Lenker um ein sicherheitsrelevantes Bauteil, bei dem ein Sturz oder ein harter Schlag durch den Untergrund einen folgenschweren Lenkerbruch verursachen kann. Bereits beim Beschleunigen und Abbremsen des Zweirads wirken üblicherweise hohe Kräfte auf den Lenkern, welche neben dem Risiko eines Lenkerbruchs ebenfalls zu einer ständigen Belastung des Lenkers beitragen.

Ausgehend von den oben skizzierten Nachteilen liegt der vorliegenden Erfindung daher die Aufgabe zugrunde, ein zuverlässiges Verfahren bereitzustellen, mit dem ein Zweiradlenker vollständig aus einem thermoplastischen Kunststoff hergestellt werden kann, der sicherheitsrelevante Anforderungen erfüllt und auf einfache Art und Weise recycelbar ist.

Erfindungsgemäß ist zur Lösung dieser Aufgabe ein Verfahren zur Herstellung eines im Inneren mindestens einen Hohlraum aufweisenden Bauteils aus thermoplastischen Kunststoff für ein Zweirad mittels Kunststoffspritzgiessens gemäß den Merkmalen des Anspruchs 1 an die Hand gegeben, wobei bevorzugte Ausgestaltungen Gegenstand der Unteransprüche sind.

Hiernach läuft das Verfahren gemäß Anspruch 1 vorteilhaft wie folgt ab:
▪ Schließen des konfigurierten Spritzgusswerkzeuges;
▪ Einspritzen einer plastifizierten Kunststoffschmelze in das geschlossene Spritzgusswerkzeug;
▪ Injizieren wenigstens eines Fluids in das geschlossene Spritzgusswerkzeug zum Verdrängen der plastischen Seele aus dem Inneren des Bauteils; und
▪ Öffnen des Spritzgusswerkzeuges und Entformen des Bauteils.

Wahlweise kann die Schrittfolge des erfindungsgemäßen Verfahrens durch folgende Schritte angepasst werden:
▪ Wahlweise nur eine geringe Nachdruckzeit von ca. zwei Sekunden nach dem Einspritzen der plastifizierten Kunststoffschmelze;
▪ Wahlweise Aufrechterhaltung des Fluiddrucks für eine kurze Zeit im Bauteilinneren (Wirkung wie ein Nachdruck);
▪ Wahlweise Spülvorgang im Bauteilinneren mittels des gleichen Fluids oder einem anderen Fluid, um eine bessere Kühlwirkung zu erzielen;
▪ Wahlweise Ausblasen des Fluids (oder Absaugen mittels Vakuum).

Generell handelt es sich bei dem verwendeten Fluid um Wasser oder Gas. Es kann aber auch aus beiden Medien bestehen, da beispielsweise häufig eine Luftblase vor dem Wasser vorangeschoben wird, oder wobei zunächst Stickstoff zur Hohlraumbildung und anschließend CO₂ zur Bauteilkühlung herangezogen wird.

Bei dem erfindungsgemäßen Verfahren bildet eine Kavität des geschlossenen Spritzgusswerkzeugs die Geometrie des zu fertigen Bauteils, wobei erfindungsgemäß ein Lenker für ein Zweirad vorgesehen ist. Das Spritzgusswerkzeug ist mit wenigstens einem Injektor für die Einbringung eines Fluids ausgerüstet. Das Fluid ist in der Lage, die plastische Seele aus dem Inneren des Bauteils zu verdrängen und so einen rohrförmigen Querschnitt des Lenkers zu formen. Dabei kann das Fluid volumenstrom- oder druck-/zeitgeregelt über ein voreingestelltes Profil injiziert werden. Durch den rohrförmigen Querschnitt kann die Abkühlphase der heißen Kunststoffschmelze aufgrund der vergleichsweise dünnen verbleibenden Restwandstärke erheblich verkürzt werden. Das bedeutet, dass nur eine vergleichsweise kurze Kühlzeit benötigt wird.

Insgesamt zeichnet sich das erfindungsgemäße Verfahren durch eine sehr deutliche Kühlzeitreduktion gegenüber einem Lenker aus vollem Material aus. Aufgrund der schnelleren Abkühlzeit kann die Prozessdauer für die Herstellung eines Zweiradlenkers deutlich reduziert werden. Es ist daher also möglich einen hohlwandigen Lenker für ein Zweirad sehr kosteneffizient gegenüber bisheriger Verfahren zu fertigen. Darüber hinaus wird durch den bauteilinneren Hohlraum die Masse des gesamten Zweiradrahmens deutlich reduziert, was nicht nur einen Gewichtsvorteil, sondern insbesondere einen ökonomischen Vorteil mit sich bringt. Bei einem geschlossenen rohrförmigen Querschnitt kann man auch von höherer Steifigkeit ausgehen. Wenn hier von einem rohrförmigen Querschnitt die Rede ist, kann dieser selbstverständlich kreisrund, oval, mehreckig und in jeder anderen beliebigen Form ausgebildet sein.

Vorteilhafte Ausgestaltungen der Erfindung ergeben sich aus den sich an den Hauptanspruch anschließenden Unteransprüchen.

Demgemäß ist bei einer vorteilhaften Ausgestaltung des erfindungsgemäßen Verfahrens vorgesehen, dass ein eingestellter Fluiddruck des wenigstens einen Fluids über einen bestimmten Zeitraum im Inneren des Bauteils aufrechterhalten bleibt und nach dem Aufrechterhalten ausgeblasen, ausgedrückt und/oder abgesaugt wird.

Ferner kann bei einer alternativen Variante des erfindungsgemäßen Verfahrens vorgesehen sein, dass das wenigstens eine Fluid die plastische Seele beispielsweise in eine in dem Spritzgusswerkzeug eingebrachte Überlaufkavität drückt.

Gemäß einer weiteren möglichen Ausgestaltung der Erfindung können auch mehr als eine Überlaufkavität und/oder mehr als ein Anspritzpunkt im Spritzgusswerkzeug vorgesehen sein.

Gemäß einer Variante des erfindungsgemäßen Verfahrens ist vorgesehen, dass das Bauteil durch das sogenannte Masserückdrückverfahren hergestellt wird, wobei das wenigstens eine Fluid die plastische Seele durch einen Kanal zurück in den Schneckenvorraum der Spritzgussmaschine verdrängt, und wobei das wenigstens eine Fluid auf der zu dem korrespondierenden Anspritzpunkt der Schmelze gegenüberliegenden Seite des Bauteils injiziert wird.

Nach wieder einer vorteilhaften Ausgestaltung des erfindungsgemäßen Verfahrens wird die wenigstens eine in das Spritzgusswerkzeug eingebrachte formgebende Bauteilkavität mit der vorteilhaft thermoplastischen Kunststoffschmelze nur teilgefüllt und die plastische Seele wird durch das Injizieren des Fluids verdrängt, wobei die flüssige Schmelze derart aufgeblasen wird, dass sie sich an die Wandung des Spritzgusswerkzeugs anlegt und ein Hohlraum im Inneren des Bauteils entsteht. Im Zuge dessen wird die wenigstens eine formgebende Bauteilkavität vollständig gefüllt. Das Aufblasen der Schmelze ermöglicht einen sehr sparsamen Einsatz des für die Bildung des Lenkers zur Verfügung stehenden thermoplastischen Kunststoffs.

Alternativ kann wenigstens eine erste formgebende Bauteilkavität im Spritzgusswerkzeug eingesetzt wird, wobei die wenigstens eine formgebende Bauteilkavität austauschbar ist, um mittels zusätzlicher formgebender Bauteilkavitäten beliebige Bauteilgeometrien zu erzeugen.

Gemäß einer weiteren vorteilhaften Ausgestaltung des erfindungsgemäßen Verfahrens werden zusätzliche in das Bauteil zu integrierende metallische Bauteile wie Bauteile aus Aluminium und/oder Stahl und/oder nicht metallische Bauteile wie pultrudierte geflochtene oder gewickelte Glasfaser-Rohre einzeln oder in Gruppen in das Spritzgusswerkzeug eingelegt und hinter- oder umspritzt werden.

Bei einer alternativen vorteilhaften Verfahrensführung werden vor dem Einspritzen der Kunststoffschmelze unidirektionale Tapes und/oder Organosheets (Design- und/oder Funktionsfolie und/oder Tape aus Kohle- oder Glasfasergewebe) in Teilbereiche oder großflächig in das Spritzgusswerkzeug eingelegt und hinterspritzt, wobei eine stoffschlüssige Verbindung mit der thermoplastischen Schmelze entsteht.

Um dabei eine bestmögliche Verbindung zwischen den Tapes und der thermoplastischen Kunststoffschmelze zu erreichen, können die Tapes/Organobleche besonders vorteilhaft vor dem Einlegen in das Werkzeug auf eine bestimmte Temperatur vorgewärmt werden, wobei diese bestimmte Temperatur abhängig vom Matrixmaterial des Tapes zu wählen ist.

Alternativ kann auch vorgesehen sein, dass die unidirektionalen Tapes und/oder die Organosheets in einem kalten und/oder in einem heißen Zustand in das Spritzgusswerkzeug eingelegt werden.

Ferner können die Tapes/Organobleche beispielsweise von einer besonderen Vorrichtung im Werkzeug platziert und gehalten werden. Durch eine zielorientierte Faserausrichtung der Tapes/Organobleche kann die Steifigkeit besonders in kritischen Bereichen des Bauteils erhöht werden.

Gemäß einer weiteren vorteilhaften Ausgestaltung des erfindungsgemäßen Verfahrens ist das Bauteil als Zweikomponenten-Bauteil aus Hart- und Weichkomponenten ausgestaltet, wobei Komponenten wie Griffstücke am Kunststofflenker als Weichkomponenten ausgebildet sind, die mittels eines Indexplatten- oder Drehtischspritzgusswerkzeugs, oder mittels einer im Spritzgusswerkzeug angeordneten zweiten Kavität erzeugt werden. Alternativ kann gemäß einer anderen Variante des erfindungsgemäßen Verfahrens vorgesehen sein, dass die Abstandshalter in den Griffbereichen des Lenkers als Hartkomponenten ausgebildet sind, die in der ersten Kavität mitgespritzt werden. In der zweiten Kavität dienen die Abstandshalter als Zentrierhilfe, um ein Verdrücken des Bauteils beim Spritzgiessen der Weichkomponenten zu verhindern.

Wiederum eine andere vorteilhafte Ausgestaltung der Erfindung sieht vor, dass ein Vorbau am Bauteil mitgespritzt wird, so dass das Bauteil und der Vorbau ein gemeinsames Bauteil bilden, oder dass das Bauteil wenigstens eine definierte Schnittstelle zur Anbringung des Vorbaus aufweist, wobei die Schnittstelle derart ausgebildet ist, dass verschiedene Vorbauten über eine Formschlussverbindung korrespondieren.

Gemäß einer alternativen vorteilhaften Verfahrensführung handelt es sich bei der wenigstens einen Schnittstelle um eine elektronische Schnittstelle zur Signalübertagung.

Vorteilhaft kann das erfindungsgemäßen Verfahren so ausgestaltet sein, dass als zu injizierendes Fluid Wasser und/oder Gas, vorzugsweise Stickstoff, welches über mindestens einen im Werkzeug angeordneten Injektor injiziert wird, vorgesehen ist.

Wiederum eine andere vorteilhafte Ausgestaltung der Erfindung sieht vor, dass mehrere Fluide in das Spritzgusswerkzeug injiziert und deren einzelne Fluidvolumenströme oder Druck/Zeit-Profile separat voneinander geregelt werden. Bei Einbringen mehrere Fluidvolumenströme durch mehrere Injektoren können diese besonders vorteilhaft separat voneinander geregelt werden.

Gemäß einer anderen vorteilhaften Ausführungsform können in dem Bauteil mitgespritze Elemente wie Bremshebelaufnahmen für Bremshebel, Kabelführungen für Kabelleitungen zur elektronischen Signalübertragung oder einer Klingel integriert sein. Darüber hinaus können auch andere Elemente in dem Bauteil integriert sein. In diesem Fall werden die in den Kunststofflenker zu integrierenden Elemente einzeln oder gruppenweise in das Spritzgusswerkzeug eingelegt, mittels einer Haltevorrichtung gehalten und mit Kunststoff umspritzt. Durch diesen Verfahrensablauf kann eine Lenkermontage auf besonders effiziente und zeitsparende Weise erfolgen, da bei dieser Variante des erfindungsgemäßen Verfahrens der Lenker gleich mit den benötigten Komponenten aus dem Spritzgußwerkzeug entnommen werden kann.

Wiederum eine andere vorteilhafte Ausgestaltung der Erfindung sieht vor, dass in dem Bauteil erhöhte und/oder vertiefte Taschen zum Halten von Elementen wie Lichtleitern, Scheinwerfer, Blinker und/oder vergleichbarer Elemente integriert sind. Die Elemente können beispielsweise bei der Endmontage des Fahrrads in die Taschen am Lenker angebracht werden.

Zur Bildung eines konstanten Innendurchmessers kann zusätzlich ein Projektil eingesetzt werden, das einen dem Hohlraum des Kunststofflenkers entsprechenden Querschnitt aufweist und durch die formgebende Kavität des Spritzgusswerkzeuges mittels des Fluiddrucks vorangetrieben wird.

Obwohl das Fluid in erster Linie zur Bildung des Hohlraums im Kunststoffrahmen dient, kann es dadurch mit einem Zweitnutzen ausgestattet werden, wenn es nach der Bildung des Hohlraums in eine Zirkulationsströmung gebracht wird, so dass es nunmehr zur Kühlung des unmittelbar nach dem Spritzprozess noch sehr heißen Kunststoffmaterials dient.

Vorteilhaft kann in dem erfindungsgemäßen Verfahren ein Kunststoff eingesetzt werden, der aus der folgenden Gruppe ausgewählt ist: Polyamid, vorzugsweise Polyamid 12, Polyamid 6 oder Polyamid 6.6, Polypropylen, Polyethylen, Polyethersulfon, Polyetherimid, Polyetherketon, Polyphenylensulfid, Polyvinylchlorid, Polyester, Acrylnitril-Butadien-Styrol (ABS), Polycarbonat/Acrylnitril-Butadien-Styrol (ABC/PC), Polycarbonat (PC) und besonders bevorzugt Polybutylenterephtalat oder Polyterephtalatethylen. Diese Kunststoffe können hierbei einzeln oder in Kombination ausgewählt und verwendet werden. Die ausgewählten Kunststoffe können darüber hinaus noch über Kurz- und/oder Langfasern aus Glas-, Carbon- und/oder Naturfasern verstärkt werden.

Alternativ kann der Kunststoff auch als Caprolactam mit einem zugehörigen Aktivator in das Spritzgusswerkzeug eingespritzt werden und im beheizten Werkzeug polymerisiert werden.

Der aus dem thermoplastischen Matrixmaterial bestehende Lenker ist jederzeit wieder recycelbar und dadurch wiederverwertbar.

Durch die positive Eigenschaft, dass der mit dem erfindungsgemäßen Verfahren erzeugte Lenker aus thermoplastischen Kunststoff besteht, ist dieser elektrisch nicht leitend, wodurch eine störungsfreie Signal-, Daten- und/oder Energieübertragung erfolgen kann. Eine zusätzliche Verkabelung, um die hergestellte Energie von einer energieerzeugenden Einheit wie beispielsweise einem Dynamo zum Verbraucher, beispielsweise einer Fahrradleuchte zu leiten, könnte auch mittels einer entsprechend funktionalisierten Folie im Hohlraum des Bauteils realisiert werden.

Durch die vorteilhafte Eigenschaft, dass der Lenker aus Kunststoff hergestellt ist, weißt dieser eine geringe Temperaturleitfähigkeit auf. Diese Eigenschaft kann insbesondere bei schlechten Witterungsverhältnissen und/oder bei Temperaturen unter dem Gefrierpunkt von Vorteil sein, da der Fahrer den Lenker beim Schieben des Fahrrads beispielsweise im Bereich des Vorbaus mit einer Hand (auch ohne Handschuhe) festhalten kann, ohne dass die am Lenker befindliche Hand derart schnell wie beim Festhalten eines metallischen Lenkers abkühlt. Denn aufgrund des hohen Temperaturleitvermögens metallischer Lenker kühlt die am Lenker befindliche Hand wesentlich schneller ab, wodurch der Fahrer bereits nach kurzer Zeit nicht mehr in der Lage ist, den Lenker auf vorgenannte Weise festzuhalten.

Letztlich betrifft die Erfindung einen Lenker aus thermoplastischen Kunststoff für ein Zweirad, der nach einer der vorgenannten Ausgestaltungen des erfindungsgemäßen Verfahrens hergestellt wird. Gemäß einer alternativen Ausführungsform kann zudem vorgesehen sein, dass der Lenker einen Lenkerhauptteil und zwei jeweils austauschbare Lenkerendteile aus thermoplastischen Kunststoff aufweist.

Weitere Einzelheiten und Vorteile der Erfindung ergeben sich aus den nachfolgenden anhand der Figuren gezeigten Ausführungsbeispiele.

Die Figuren zeigen:
**Fig. 1** zeigt einen Lenker gemäß einer ersten Bauform des Bauteils, der mittels des erfindungsgemäßen Verfahrens gefertigt wurde;
**Fig. 2** zeigt einen Lenker gemäß einer zweiten Bauform des Bauteils, der mittels des erfindungsgemäßen Verfahrens gefertigt wurde;
**Fig. 3** zeigt den Lenker gemäß der ersten Bauform mit Lenkervorbau und Überlaufkavität;
**Fig. 4** zeigt einen Schnitt durch den Lenkervorbau;
**Fig. 5** zeigt den Lenker der zweiten Bauform mit Überlaufkavität;
**Fig. 6** zeigt einen Schnitt durch den in **Fig. 5** gezeigten Lenker mit Überlaufkavität;
**Fig. 7** zeigt den Lenker der zweiten Bauform mit Haltetaschen;
**Fig. 8** zeigt eine alternative Variante des Lenkers gemäß **Fig. 7****;**
**Fig. 9** zeigt einen Schnitt durch den Lenkervorbau des Lenkers der zweiten Bauform;
**Fig. 10** zeigt den Lenker der zweiten Bauform mit eingelegten unidirektionale Tapes und/oder Organosheets;
**Fig. 11** zeigt eine Lenkerabdeckung mit integrierten Funktionselementen;
**Fig. 12 und Fig. 13** zeigen alternative Ausführungsbeispiele des mit dem erfindungsgemäßen Verfahren hergestellten Lenkers.

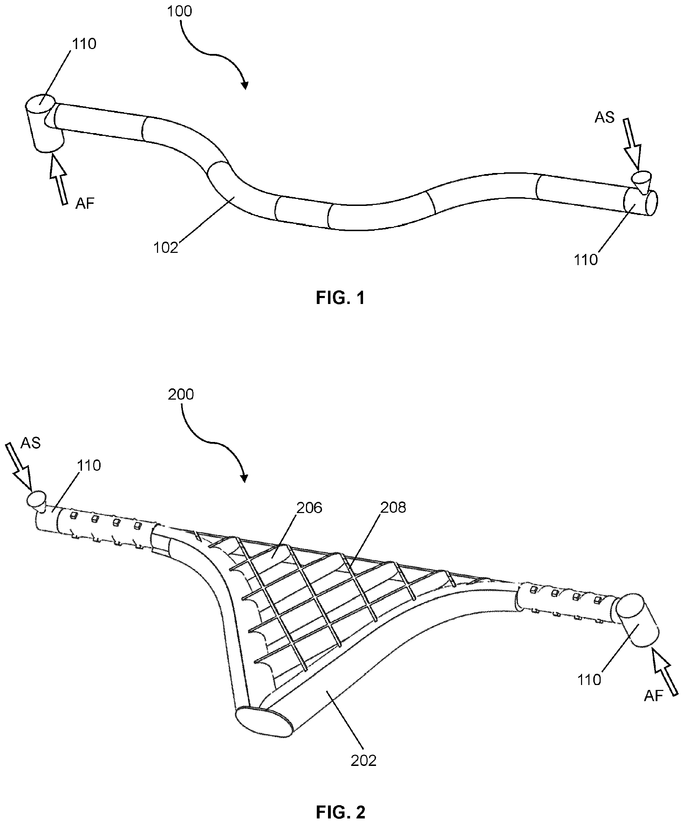

In den Ausführungsbeispielen gemäß der **Fig. 1** bis **13** werden die Bauteile näher betrachtet, welche mit dem erfindungsgemäßen Verfahren bzw. mit einer Variante des Verfahrens hergestellt wurden.

Generell kann ein Verdrängen der plastischen Seele aus dem Bauteil auf unterschiedliche Weise erfolgen. Die in den **Fig. 1** und **2** dargestellten Bauteile, werden beispielsweise durch ein Zurückdrücken des Materials der plastischen Seele in den Schneckenvorraum der Spritzgussmaschine erzeugt. Diese Form der Verfahrensführung wird auch als Masserückdrücken bezeichnet.

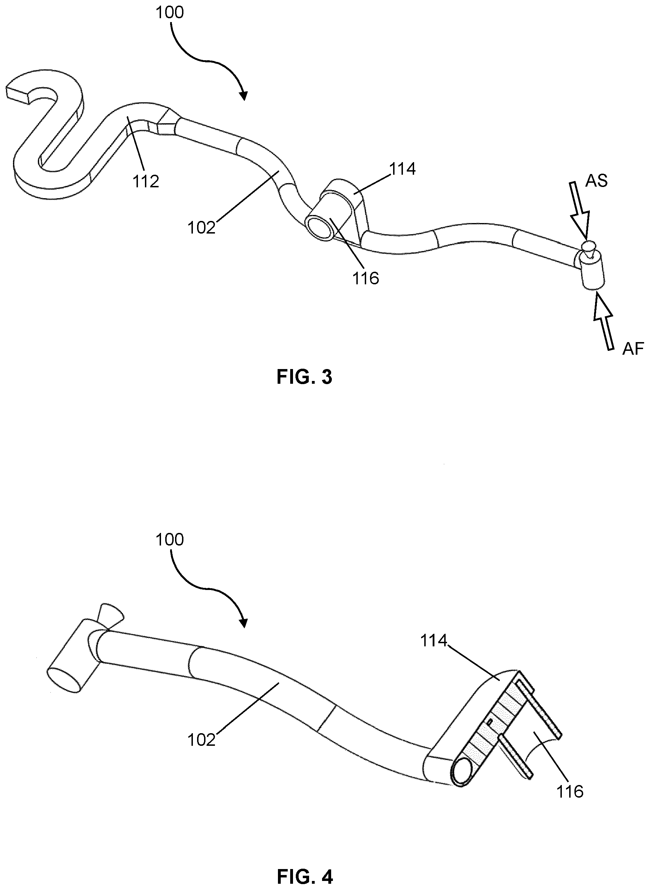

Anstelle der vorgenannten Verfahrensführung kann auch ein Ausblasen des Materials der plastischen Seele in eine Überlaufkavität gemäß der **Fig. 3****,** **5** und **6** erfolgen.

Schließlich kann auch ein Aufblasverfahren vorgesehen sein, bei dem eine geringere Menge thermoplastischen Kunststoffs in das Spritzgußwerkzeug eingeleitet wird, welches daraufhin aufgeblasen wird. Die Menge des eingeleiteten Kunststoffs ist dabei so gewählt, dass beim Aufblasen kein Material aus dem Spritzgußwerkzeug verdrängt wird.

In den Ausführungsbeispielen wird als thermoplastisches Kunststoffmaterial vorzugsweise Polyamid oder Polyolefin, welches über Glasfasern und/oder Kohlefasern und/oder Naturfasern verstärkt ist, verwendet.

**Fig. 1** zeigt schematisch das Bauteil 100 umfassend einer Lenkstange 102 für ein Zweirad, die gemäß des erfindungsgemäßen Verfahrens gefertigt wurde. Ferner zeigt **Fig. 2** das Bauteil 200 umfassend einer Lenkstange 202, die einer zweiten Bauform entspricht und ebenfalls gemäß des erfindungsgemäßen Verfahrens gefertigt wurde. Nicht näher dargestellt ist das geschlossene Werkzeug, in dem die dargestellten Lenkstangen 102 bzw. 202 eingelegt sind.

Die in den **Fig. 1** und **2** dargestellten Bauteile 100 und 200 werden jeweils durch das Masserückdrückverfahren erzeugt, wobei durch das Injizieren des Fluids die plastische Seele über einen nicht näher gezeigten Kanal zurück in den Schneckenvorraum der Spritzgussmaschine verdrängt wird. Das vordringende Fluid wird auf der zu dem korrespondierenden Anspritzpunkt AS der Schmelze gegenüberliegenden Seite des Bauteils 100 bzw. 200 injiziert. Wie aus den **Fig. 1** und **2** weiterhin hervorgeht, sind daher an den Enden der in den **Fig. 1** und **2** dargestellten Lenkstangen 102 bzw. 202 jeweils Anspritzelemente 110 mit den Anspritzpunkten AS oder AF angeordnet. An dem linksseitig an der Lenkstange 102 bzw. 202 angeordneten Anspritzelement 110 liegt der Anspritzpunkt AF, während auf der gegenüberliegenden Seite der Lenkstange 102 bzw. 202 der Anspritzpunkt AS vorgesehen ist.

Am Anspritzpunkt AS wird gemäß des erfindungsgemäßen Verfahrens eine plastifizierte Kunststoffschmelze in Pfeilrichtung des dargestellten Pfeils eingespritzt, während am Anspritzpunkt AF nach dem Einspritzen der Schmelze das Fluid in Pfeilrichtung des korrespondierenden Pfeils durch einen hier nicht näher dargestellten Injektor eingepresst wird, der die sogenannte plastische Seele aus dem Inneren des Bauteils 100 bzw. 200 verdrängt.

Die im Spritzgusswerkzeug eingelegten Werkzeuge bilden dabei formgebende Bauteilkavitäten. Anhand dieser nicht näher dargestellten formgebenden Kavitäten ist es möglich, hohlwandige Bauteile in großer Stückzahl mit einer bestimmten Formgebung im Inneren des Bauteils zu erzeugen.

Gemäß einer alternativen Variante des Verfahrens kann die wenigstens eine formgebende Bauteilkavität austauschbar sein, um mittels zusätzlicher formgebender Bauteilkavitäten beliebige Bauteilgeometrien erzeugen zu können.

Durch zusätzliche Versteifungselemente wie die in der **Fig. 2** dargestellten Rippen 206 und 208 kann der Kunststofflenker 202 zusätzlich verstärkt werden, indem eine netzartige Rippenstruktur aus rechtsgerichteten Rippen 206 in Kombination mit linksgerichteten Rippen 208 gebildet wird.

Wie **Fig. 3** zeigt, können die Anspritzpunkte AS und AF gemäß einer alternativen Variante des erfindungsgemäßen Verfahrens lediglich nur auf einer Seite des Bauteils 100 angeordnet sein. Bei dieser Variante befindet sich stattdessen auf der gegenüberliegenden Seite der Anspritzpunkte AS und AF eine im Spritzgusswerkzeug eingebrachte Überlaufkavität 112, in die die plastische Seele bzw. das überschüssige Kunststoffmaterial gedrückt wird. Sobald die Fluidinjektion und die damit einhergehende Verdrängung des überschüssigen Kunststoffmaterials aus dem Bauteil 100 abgeschlossen ist, wird die Überlaufkavität 112 vorzugsweise über einen nicht näher gezeigten Schieber hydraulisch, pneumatisch und/oder elektrisch geschlossen.

Neben der bereits genannten Überlaufkavität 112 zeigt die Darstellung gemäß **Fig. 3** einen an der Lenkstange 102 mitgespritzten Lenkervorbau 114, in dem ein rohrförmiges Einlegeteil 116 aus Aluminium und/oder Stahl hinter- oder umspritzt wurde.

**Fig. 4** zeigt einen Schnitt durch den in Fig. 3 dargestellten Lenkervorbau 114 sowie des Einlegeteils 116.

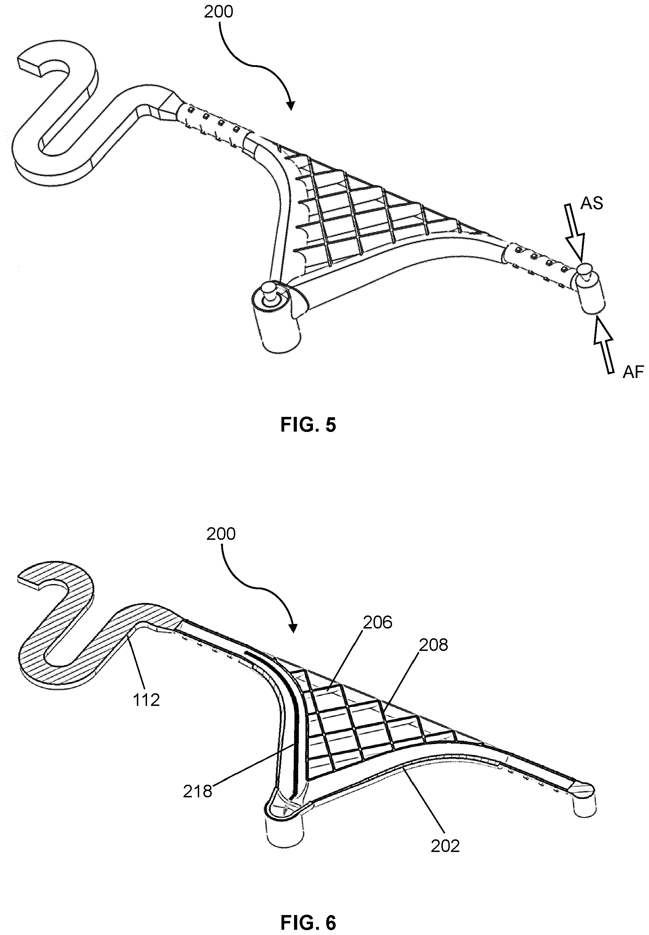

**Fig. 5** zeigt das Bauteil 200 mit einem am Lenker 202 mitgespritzten Lenkervorbau 214, das gemäß der vorgenannten alternativen Variante des erfindungsgemäßen Verfahrens hergestellt wird.

**Fig. 6** zeigt einen Schnitt durch das Bauteil 200 und der daran angrenzenden Überlaufkavität 112, sodass der Hohlraum in der Lenkstange 202 erkennbar ist. Der Hohlraum kann als Kabelführung 218 vorgesehen sein, um eine Verbindung zwischen am Lenker und/oder im Lenker angeordnete elektronische Geräte mit anderen am Zweirad angebrachter elektronischer Geräte zu verbinden. Besonders vorteilhaft ist hierbei, dass die im Hohlraum der Lenkstange 202 verlaufenden Kabel mittels der Kabelführung 218 direkt über den hohlwandig ausgebildeten Vorbau 214 in den Rahmen des Zweirades führen können. Alternativ kann der Hohlraum der Lenkstange 202 auch als Führung für Brems- und/oder Schaltzüge genutzt werden. Denkbar wäre hierbei auch eine Führung von hydraulischen Bremsleitungen oder dergleichen.

Gemäß einer anderen Varianten des erfindungsgemäßen Verfahrens können im Spritzgusswerkzeug insbesondere bei komplexen Bauformen des Bauteils 100 bzw. 200 auch mehr als eine Überlaufkavität 112 und/oder mehr als ein Anspritzpunkt AS bzw. AF vorgesehen sein.

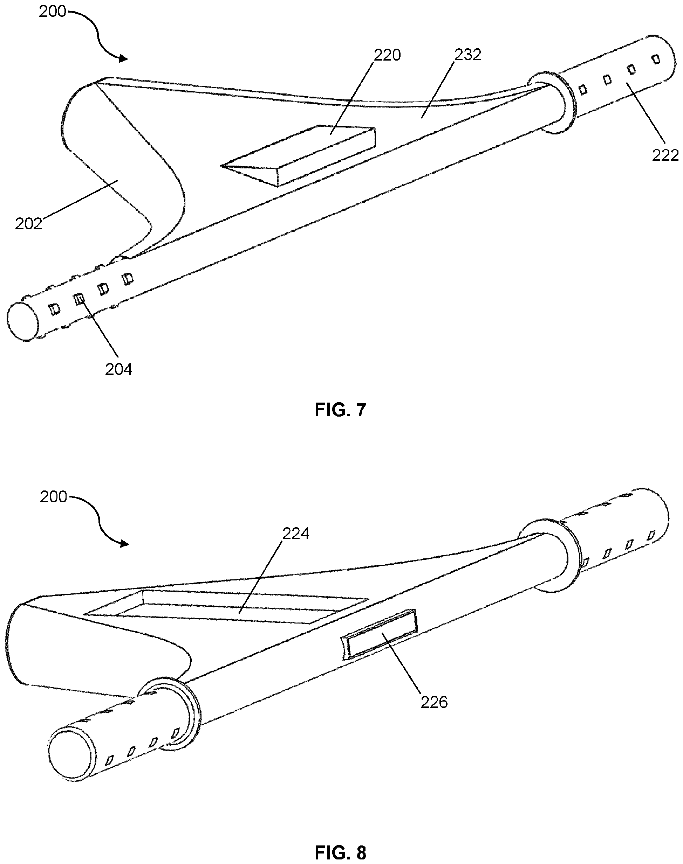

Gemäß der Darstellung nach **Fig. 7** ist das Bauteil 200 als Zweikomponenten-Bauteil aus Hart- und Weichkomponenten ausgeführt ist. Bei dieser Variante des erfindungsgemäßen Verfahrens werden zunächst die in den Griffbereichen des Bauteils liegenden Hartkomponenten wie die Abstandshalter 204 in einer ersten Kavität mitgespritzt. Die Abstandshalter 204 können dann in einer zweiten Kavität als Zentrierhilfe vorteilhaft genutzt werden, um ein Verdrücken des mit den Abstandshaltern versehenen Bauteils beim Spritzgiessen der Weichkomponenten wie der Griffstücke 222 zu verhindern.

Entsprechend der **Fig. 7** und **8** können in dem Bauteil 200 erhöhte Taschen 220 und/oder vertiefte Taschen 224 zum Halten von Elementen wie Lichtleitern, Scheinwerfer, Blinker und/oder ähnlicher Elemente in der Abdeckung 232 des Lenkers integriert sein. Gemäß **Fig. 8** kann weiterhin eine Tasche 226 zwischen den Griffbereichen des Lenkers 202 integriert sein.

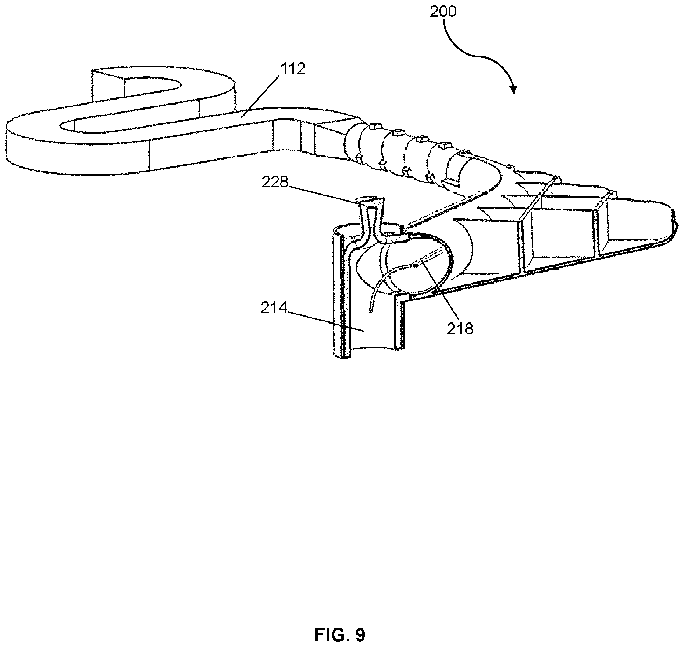

Die Schnittdarstellung gemäß **Fig. 9** zeigt ein im Vorbau 214 der Lenkstange 202 integriertes metallisches bzw. nicht metallisches Insert 228, welches bei einer alternativen Variante des erfindungsgemäßen Verfahrens als Verstärkungselement in den Vorbau eingelegt und umspritzt wird. Zugleich kann die hohlwandige Ausführung des Inserts 228 als eine Fortsetzung der Kabelführung 218 vorgesehen sein.

Um die Festigkeit der Lenkerstruktur zu erhöhen, können in das Bauteil 200 vor dem Einspritzen der Kunststoffschmelze gemäß einer alternativen Variante des erfindungsgemäßen Verfahrens unidirektionale Tapes und/oder Organosheets 230 in Teilbereiche des Spritzwerkzeugs oder großflächig in das Spritzwerkzeug eingelegt und anschließend hinterspritzt werden. Dabei wird eine stoffschlüssige Verbindung mit der thermoplastischen Schmelze gebildet. Auf diese Weise kann ein Strukturversagen des Lenkers selbst bei besonders hohen Belastungen ausgeschlossen werden.

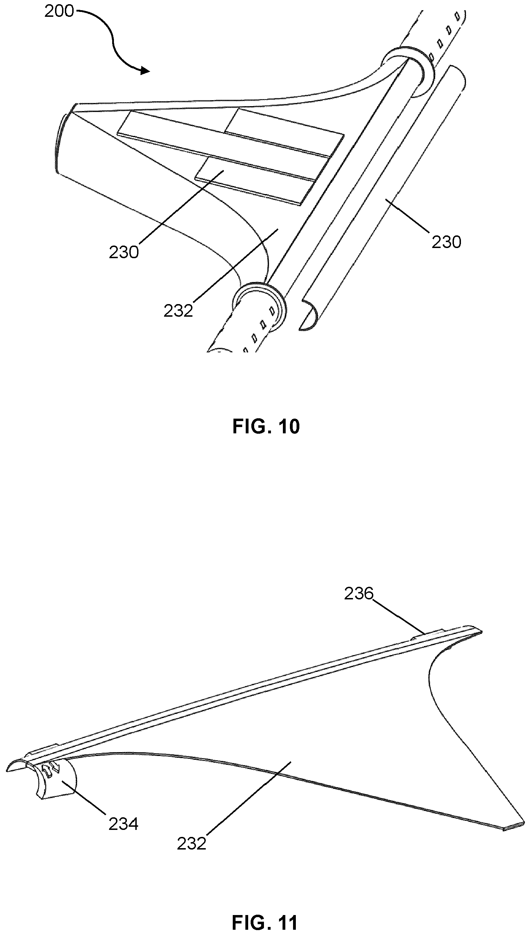

Wie in **Fig. 10** dargestellt, können die unidirektionalen Tapes und/oder Organosheets 230 in beliebigen Teilbereichen des Lenkers vorgesehen sein. Beispielsweise direkt auf der Abdeckung 232 und/oder in einem zwischen den Griffen liegenden Bereich.

**Fig. 11** zeigt eine Weiterbildung der Abdeckung 232 mit mitgespritzten Funktionselementen wie Bremsaufnahmen, Kabelführungen, einer Klingel und/oder anderer Elemente. In der Darstellung gemäß **Fig. 11** weiterhin gezeigt ist eine integrierte Schaltfunktion 234 sowie eine zusätzliche Tasche 236 für eine Lichtintegration.

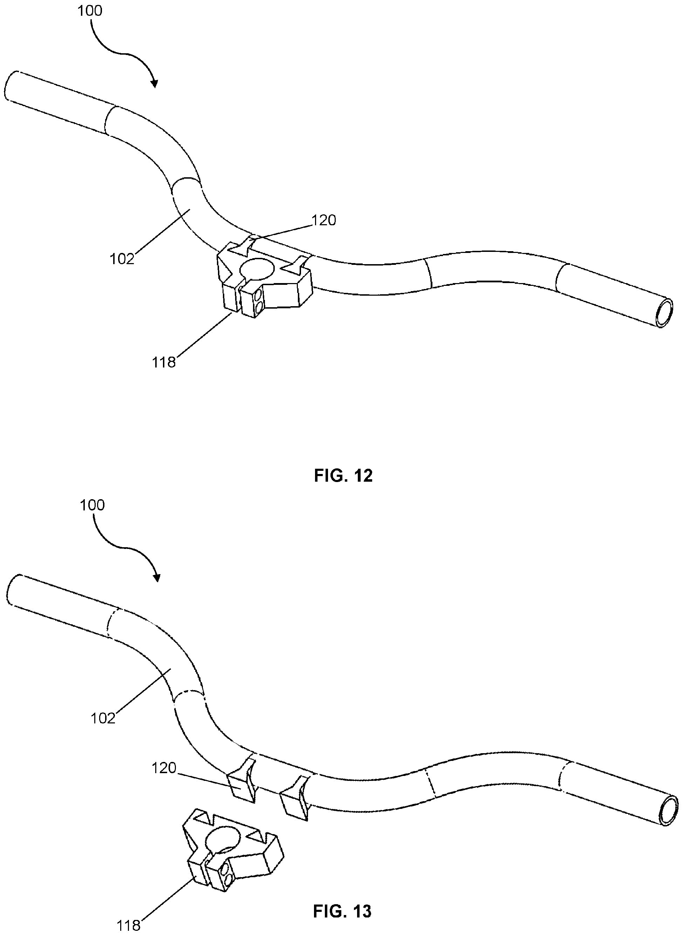

Die **Fig. 12** und **13** stellen eine alternative Bauweise eines mittels des erfindungsgemäßen Verfahrens erzeugten Lenkers dar. Die Besonderheit der in den **Fig. 12** und **13** gezeigten Ausführungsform des Lenkers stellt die Befestigung zwischen der Lenkstange 102 an den Vorbau 118 dar. Wie besagte Figuren zeigen, sind an der Lenkstange 102 mitgespritzte Profile 120 integriert. Gleichwohl weißt der Vorbau 118 mit zu den an der Lenkstange 102 integrierten Profilen 120 korrespondierende Profile auf. Auf diese Weise kann die Lenkstange 102 mittels der integrierten Profile 120 zeitsparend und einfach, d. h. ohne technische Hilfsmittel an dem Vorbau 118 befestigt werden. Dadurch wird der Austausch einer beschädigten Lenkstange 102 auf besonders vorteilhafte Weise vereinfacht. Natürlich können mit dem erfindungsgemäßen Verfahren auch beliebig andere Ausformungen der Lenkstange 102 erzeugt werden, die mit dem Vorbau 118 kompatibel sind.

**Fig. 12** zeigt die an den Vorbau 118 angebrachte Lenkstange 102. In **Fig. 13** werden die aus der **Fig. 12** bereits bekannte Lenkstange 102 sowie der Vorbau 118 noch einmal getrennt voneinander dargestellt.

Neben der in den **Fig. 12** und **13** gezeigten Möglichkeit zur Ausgestaltung eines mittels des erfindungsgemäßen Verfahrens erzeugten Lenkers wäre ebenso denkbar, dass an der Lenkstange zwei ansteckbaren Lenkerendteilen aus thermoplastischen Kunststoff vorgesehen sind. Durch das Anstecken des rechten bzw. linken Lenkerendteils ist ein unkomplizierter Austausch flexibel durchführbar. Dieses Prinzip kann sich bei einem Schaden am Lenker oder allgemein als vorteilhaft erweisen.

Alles in allem stellt die vorliegende Erfindung im Hinblick auf die Herstellung von Bauteilen aus thermoplastischen Kunststoff für Zweiräder eine hervorragende Lösung dar.

### Bezugszeichenliste

- 100: Bauteil erster Bauform
- 102: Lenkstange
- 110: Anspritzelemente
- 112: Überlaufkavität
- 114: Vorbau
- 116: rohrförmiges Einlegeteil
- 118: Vorbau mit Profil
- 120: integriertes Profil
- 200: Bauteil zweiter Bauform
- 202: Lenkstange
- 204: Abstandshalter
- 206: rechtsgerichtete Rippe
- 208: linksgerichtete Rippe
- 214: Vorbau
- 218: Kabelführung
- 220: erhöhte Taschen
- 222: Griffstücke
- 224: vertiefte Taschen
- 226: Tasche
- 228: metallisches/ nicht-metallisches Insert
- 230: unidirektionale Tapes und/oder Organosheets
- 232: Abdeckung

## Patentansprüche

1. Verfahren zur Herstellung eines im Inneren wenigstens einen Hohlraum aufweisenden Bauteils aus thermoplastischem war Kunststoff für ein Zweirad mittels Kunststoffspritzgiessens, folgende Schritte umfassend:
- Schließen des konfigurierten Spritzgusswerkzeuges;
- Einspritzen einer plastifizierten Kunststoffschmelze in das geschlossene Spritzgusswerkzeug;
- Injizieren wenigstens eines Fluids in das geschlossene Spritzgusswerkzeug zum Verdrängen der plastischen Seele aus dem Inneren des Bauteils; und
- Öffnen des Spritzgusswerkzeuges und Entformen des Bauteils,
- **dadurch gekennzeichnet,**
**dass** es sich bei dem Bauteil um einen Lenker handelt, bei dem ein Vorbau am Bauteil mitgespritzt wird, so dass das Bauteil und der Vorbau ein gemeinsames Bauteil bilden, oder bei dem das Bauteil wenigstens eine definierte Schnittstelle zur Anbringung des Vorbaus aufweist, wobei die Schnittstelle derart ausgebildet ist, dass verschiedene Vorbauten über eine Formschlussverbindung korrespondieren.

2. Verfahren nach Anspruch 1, **dadurch gekennzeichnet, dass** ein eingestellter Fluiddruck des wenigstens einen Fluids über einen bestimmten Zeitraum im Inneren des Bauteils aufrechterhalten bleibt und nach dem Aufrechterhalten ausgeblasen, ausgedrückt und/oder abgesaugt wird.

3. Verfahren nach Anspruch 1 oder 2, **dadurch gekennzeichnet, dass** das wenigstens eine Fluid die plastische Seele in eine im Spritzgusswerkzeug eingebrachte Überlaufkavität drückt, wobei vorteilhaft im Spritzgusswerkzeug mehr als eine Überlaufkavität und/oder mehr als ein Anspritzpunkt vorgesehen sein kann.

4. Verfahren nach Anspruch 1 oder 2, **dadurch gekennzeichnet, dass** das Bauteil durch das Masserückdrückverfahren hergestellt wird, wobei das wenigstens eine Fluid die plastische Seele durch einen Kanal zurück in den Schneckenvorraum der Spritzgussmaschine verdrängt, und wobei das wenigstens eine Fluid auf der zu dem korrespondierenden Anspritzpunkt der Schmelze gegenüberliegenden Seite des Bauteils injiziert wird.

5. Verfahren nach Anspruch 1 oder 2, **dadurch gekennzeichnet, dass** wenigstens eine in das Spritzgusswerkzeug eingebrachte formgebende Bauteilkavität mit der thermoplastischen Kunststoffschmelze nur teilgefüllt wird und die plastische Seele durch das Injizieren des Fluids verdrängt wird, wobei die flüssige Schmelze derart aufgeblasen wird, dass sie sich an die Wandung des Spritzgusswerkzeugs anlegt und ein Hohlraum im Inneren des Bauteils entsteht, und wobei die wenigstens eine formgebende Bauteilkavität vollständig gefüllt wird.

6. Verfahren nach einem der Ansprüche 1 bis 4, **dadurch gekennzeichnet, dass** wenigstens eine erste formgebende Bauteilkavität im Spritzgusswerkzeug eingesetzt wird, wobei die wenigstens eine formgebende Bauteilkavität austauschbar ist, um mittels zusätzlicher formgebender Bauteilkavitäten beliebige Bauteilgeometrien zu erzeugen.

7. Verfahren nach einem der vorhergehenden Ansprüche, **dadurch gekennzeichnet, dass** zusätzliche in das Bauteil zu integrierende metallische Bauteile wie Bauteile aus Aluminium und/oder Stahl, und/oder nicht metallische Bauteile wie pultrudierte geflochtene oder gewickelte Faser-Rohre, einzeln oder in Gruppen in das Spritzgusswerkzeug eingelegt und hinter- oder umspritzt werden.

8. Verfahren nach einem der vorhergehenden Ansprüche, **dadurch gekennzeichnet, dass** vor dem Einspritzen der Kunststoffschmelze unidirektionale Tapes und/oder Organosheets in Teilbereiche des Spritzgusswerkzeugs oder großflächig in das Spritzgusswerkzeug eingelegt und hinterspritzt werden, wobei eine stoffschlüssige Verbindung mit der thermoplastischen Schmelze entsteht, wobei vorteilhaft die unidirektionalen Tapes und/oder die Organosheets in einem kalten und/oder in einem heißen Zustand in das Spritzwerkzeug eingelegt werden.

9. Verfahren nach einem der vorhergehenden Ansprüche, **dadurch gekennzeichnet, dass** das Bauteil als Zweikomponenten-Bauteil aus Hart- und Weichkomponenten ausgestaltet ist, wobei Komponenten wie Griffstücke am Kunststofflenker als Weichkomponenten ausgebildet sind, die mittels eines Indexplatten- oder Drehtischspritzgusswerkzeugs, oder mittels einer im Spritzgusswerkzeug angeordneten zweiten Kavität erzeugt werden, wobei vorteilhaft in den Griffbereichen des Bauteils Hartkomponenten, insbesondere Abstandshalter in der ersten Kavität mitgespritzt werden und die Abstandshalter in der zweiten Kavität als Zentrierhilfe dienen, um ein Verdrücken des Bauteils beim Spritzgiessen der Weichkomponenten zu verhindern.

10. Verfahren nach einem der Ansprüche 1-9, **dadurch gekennzeichnet, dass** es sich bei der wenigstens einen Schnittstelle um eine elektronische Schnittstelle zur Signalübertagung handelt.

11. Verfahren nach einem der vorhergehenden Ansprüche, **dadurch gekennzeichnet, dass** als zu injizierendes Fluid Wasser und/oder Gas, vorzugsweise Stickstoff, welches über mindestens einen im Werkzeug angeordneten Injektor injiziert wird, vorgesehen ist.

12. Verfahren nach einem der vorhergehenden Ansprüche, **dadurch gekennzeichnet, dass** mehrere Fluide in das Spritzgusswerkzeug injiziert und deren einzelne Fluidvolumenströme oder Druck/Zeit-Profile separat voneinander geregelt werden.

13. Verfahren nach einem der vorhergehenden Ansprüche, **dadurch gekennzeichnet, dass** in dem Bauteil mitgespritzte Elemente wie Bremshebelaufnahmen, Kabelführungen, einer Klingel und/oder andere Elemente oder erhöhte und/oder vertiefte Taschen zum Halten von Elementen wie Lichtleitern, Scheinwerfer, Blinker und/oder ähnlicher Elemente integriert sind.

14. Lenker aus thermoplastischem Kunststoff für ein Zweirad, **dadurch gekennzeichnet**, das der Lenker mit dem Verfahren gemäß einem der Ansprüche 1 bis 13 hergestellt wird.

15. Lenker nach Anspruch 9, **dadurch gekennzeichnet, dass** der Lenker einen Lenkerhauptteil und zwei jeweils austauschbare Lenkerendteile aus thermoplastischem Kunststoff aufweist.
